# EUROPEAN PATENT SPECIFICATION

(11) **EP 2 219 330 B1**
(45) Date of publication and mention of the grant of the patent: **03.06.2015**
(21) Application number: 09704965.4
(22) Date of filing: 20.01.2009
(51) Int. Cl.: H04L 29/06

(54) **METHOD FOR ENHANCING SERVICE, PROXY SERVER AND COMMUNICATIONS SYSTEM**
VERFAHREN ZUR DIENSTERWEITERUNG, PROXY-SERVER UND KOMMUNIKATIONSSYSTEM
PROCÉDÉ POUR RENFORCER UN SERVICE, SERVEUR MANDATAIRE ET SYSTÈME DE COMMUNICATION

(30) Priority: 22.01.2008 CN 200810000803
(43) Date of publication of application: 18.08.2010
(73) Proprietor: Huawei Technologies Co., Ltd., Longgang District Shenzhen, Guangdong 518129 (CN)
(72) Inventor: JIN, Hongbo, Longgang District 518129 Shnezhen (CN); WEN, Changcheng, Longgang District 518129 Shnezhen (CN)
(74) Representative: Pfenning, Meinig & Partner GbR
(86) International application number: PCT/CN2009/070223
(87) International publication number: WO 2009/094932

(56) References cited:
- EP-A2- 1 244 261
- EP-A2- 1 753 201
- CN-A- 1 662 004
- CN-A- 101 075 953
- CN-A- 101 079 810
- FR-A1- 2 873 881

## Description

### Field of the Invention

The present invention relates to Session Initiation Protocol (SIP) communication technologies, and in particular, to a service enhancement method, a proxy server and a communication system.

### Background of the Invention

With the rapid development of networks, a new generation Internet Protocol (IP)-based Session Initiation Protocol (SIP) is put forward. SIP is applicable to various types of media contents and realizes multi-user sessions and has now become specifications of the Internet Engineering Task Force (IETF). The ITEF SIP working group released RFC 3261 in June 2006, which replaced RFC 2543 that was released in March 1999. SIP is a text based protocol and an application layer control signaling protocol for creating, changing or terminating a session involving one or more participants. SIP mainly supports the setup and termination of multimedia communication sessions. In a traditional SIP system, a SIP proxy server routes and forwards SIP messages.

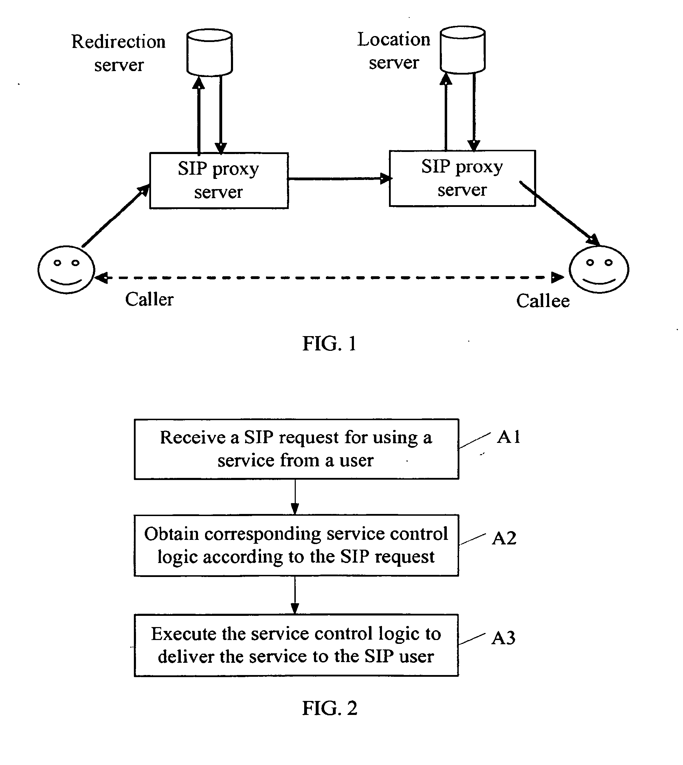

FIG. 1 shows a structure of a SIP communication system in the prior art. Users communicate with each other via their SIP proxy servers. Even if a caller does not know the host name or IP address of a callee, the SIP proxy server will find the address of the SIP proxy server of the callee via a redirection server and the SIP proxy server of the callee will locate the callee via a location server so that the caller and callee can communicate.

During the research and practice of the prior art, the inventor discovers the following problems:

Users have higher requirements on the communication system and hope the system to provide more diversified services; although SIP proxy servers in the prior art can implement basic setup and termination of multimedia communication sessions, they are not aware of services or cannot control the running of services, and therefore, cannot meet the diversified service requirements.

EP 1 244 261 A2 discloses a SIP application server which is connected to a serving GPRS support node by a SIP user agent. The SIP application server may include a call server as an SIP protocol engine, an SIP scripts execution environment, APIs to realize a service logic callable by the SIP scripts execution environment and applications to which the APIs may connect.

FR 2 873 881 discloses a method for allowing the execution of a service logic from a plurality of logical services hosted in an application server of a network operation under SIP, the network including a SIP server receiving messages from users who require access to the service logic and sending messages to the server application. In the method each service logic is associated is an identifier that is inserted into the message transferred by the SIP server to the application server.

### Summary of the Invention

Embodiments of the present invention provide a SIP service enhancement method and a SIP proxy server so as to enhance the SIP proxy server and meet the diversified service requirements of users.

A SIP service enhancement method includes:
receiving a SIP request for using a service from a SIP user;
obtaining service control logic according to the SIP request wherein obtaining service control logic according to the SIP request comprises:
   parsing the SIP request to obtain a service ID of the service;
   loading a service process description information corresponding to the service ID; and
   parsing the service process description information to obtain the service control logic; and
   executing the service control logic to deliver the service to the SIP user. A SIP proxy server includes:
      a SIP transfer interface unit, adapted to receive a SIP request for using a service from a SIP user; and
      a service processing unit, adapted to: obtain service control logic according to the SIP request received by the SIP transfer interface unit and execute the service control logic to deliver the service to the SIP user wherein the service processing unit comprises:
         a protocol processing unit, adapted to parse the SIP request received by the SIP transfer interface unit to obtain the service ID of the service;
         a service control logic parsing unit, adapted to load the service process description information corresponding to the service ID obtained by the protocol processing unit and parse the service process description information to obtain the service control logic; and
         a service executing unit, adapted to execute the service control logic obtained by the service control logic parsing unit to deliver the service to the SIP user.

A communication system includes:
a SIP proxy server, adapted to: receive a SIP request for using a service from a SIP user, obtain service control logic according to the SIP request and execute the service control logic to deliver the service to the SIP user wherein obtaining service control logic according to the SIP request comprises:
   the SIP proxy server adapted to parse the SIP request to obtain a service ID of the service; the SIP proxy server adapted to load a service process description information corresponding to the service ID; the SIP proxy server adapted to parse the service process description information to obtain the service control logic; and
   a service process description database, adapted to store descriptions of various service processes which can be parsed and executed by the SIP proxy server.

With the above technical solution, the embodiments of the present invention provide the following benefit:
In the embodiments of the present invention, a SIP request for using a service is received from a SIP user; the service control logic is obtained according to the SIP request; and the service control logic is executed to deliver the service to the SIP user. In this way, the SIP proxy server is able to control a service and provide diversified services for users by executing different service control logic so as to meet user requirements for diversified services in the current communication system.

### Brief Description of the Drawings

FIG. 1 shows a structure of a SIP communication system in the prior art;
FIG. 2 shows a flowchart of a SIP service enhancement method according to a first embodiment of the present invention;
FIG. 3 shows a flowchart of a SIP service enhancement method according to a second embodiment of the present invention;
FIG. 4 shows a flowchart of a conference call method according to a third embodiment of the present invention;
FIG. 5 shows a flowchart of executing service control logic in the conference call process in the third embodiment of the present invention;
FIG. 6 shows a flowchart of a weather forecast method according to a fourth embodiment of the present invention;
FIG. 7 shows a flowchart of executing service control logic to provide a weather forecast service for a user in the fourth embodiment of the present invention;
FIG. 8 shows a structure of a SIP proxy server according to an embodiment of the present invention; and
FIG. 9 shows a structure of a communication system according to an embodiment of the present invention.

### Detailed Description of the Invention

Embodiments of the present invention provide a SIP service enhancement method and a SIP proxy server so as to enhance the SIP proxy server and meet the diversified service requirements of users.

The SIP service enhancement method and the SIP proxy server provided in the embodiments of the present invention will be described in detail.

FIG. 2 shows a flowchart of a SIP service enhancement method according to an embodiment of the present invention. The method includes:
A1. Receive a SIP request for using a service from a SIP user.
A2. Obtain service control logic according to the SIP request.

It is understandable that in this embodiment, the process of obtaining the service control logic includes: parsing the SIP request to obtain a service ID of the service; loading the service process description information corresponding to the service ID, where the service process description information may be stored locally or stored in another network element, or preferably, in view of the need to enhance multiple SIP servers in the network, the service process description information may also be stored in a service process description database which provides services for multiple enhanced SIP proxy servers in the system; and parsing the service process description information to obtain the service control logic.

It is understandable that the service process description information is a control program compiled in a software language and that the control program is parsed to obtain the service logic which the SIP proxy server uses to control the current service. It is understandable that the service process description information may be compiled in multiple languages. In this embodiment, BPEL4SIP is used; in other embodiments, such languages as XML, C++ and JAVA can be adopted. The present invention stresses that an appropriate language parsing platform is built in the SIP proxy server to parse the program language and obtain the service control logic. There are multiple programming languages, which are not limited herein.
A3. Execute the service control logic to deliver the service to the SIP user.

In this embodiment, a SIP proxy server receives a SIP request for using a service from a SIP user, obtains the service control logic according to the SIP request, and executes the service control logic to deliver the service to the SIP user. In this way, the SIP proxy server is able to control a service and provide diversified services for users by executing different service control logic so as to meet user requirements for diversified services in the current communication system.

It is understandable to those skilled in the art that all or part of the steps of the foregoing embodiments may be implemented by hardware instructed by a program. The program may be stored in a computer-readable storage medium. When being executed, the program performs the following steps:
receiving a SIP request for using a service from a SIP user;
obtaining service control logic according to the SIP request; and
executing the service control logic to deliver the service to the SIP user.

The storage medium may be a read-only memory, a magnetic disk or a compact disk.

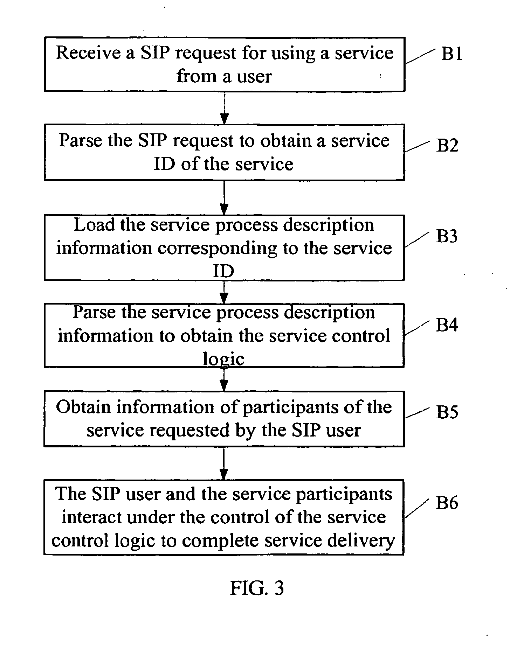

FIG. 3 shows a flowchart of a SIP service enhancement method according to the second embodiment of the present invention. The method includes:
B1. Receive a SIP request for using a service from a SIP user.
B2. Parse the SIP request to obtain a service ID of the service.
B3. Load a service process description information corresponding to the service ID.
B4. Parse the service process description information to obtain the service control logic.
B5. Obtain information of participants of the service requested by the SIP user.

In this embodiment, the method for obtaining information of service participants includes: parsing the service process description information to obtain the information of service participants. For example, some services require fixed service participants, like special servers (such as a multimedia server and a network broadcast server). Such service participants are fixed and the information can be stored in the service process description information.

Optionally, the method for obtaining information of service participants is to obtain information of service participants that a user inputs.

Steps B5 and B4 involve no sequence.

User inputs can be transferred to the SIP proxy server as signaling parameters or to a content gateway as content parameters and the SIP proxy server will obtain the user inputs from the content gateway.

It is understandable that the service participants may be SIP users or network resources required by the service.

B6. The SIP user and the service participants interact under the control of the service control logic to complete service delivery.

The Business Process Execution Language for Web Services (BPEL4WS), when applied to a SIP environment, is abbreviated to BPEL4SIP. In this embodiment, a BPEL4SIP engine in the SIP proxy server controls the processing of SIP messages in every step according to the service logic.

The service control logic of BPEL4SIP may be of a serial, parallel, conditional, cyclic or any other structure.

Below is an execution rule and triggering mode of service control logic in this embodiment:
(1) Exchange SIP messages with the participating SIP user according to the control logic; depending on the service requirement, there may be multiple participants and it is understandable that some services may not require participation of other SIP users whereas the network directly provides services for the requesting terminal, for example, weather forecast and web multimedia video services.
(2) SIP interactive messages distinguish between sending and receiving. In the case of receiving SIP signaling, the service focus stays at the current step and waits for the participating user to send the SIP signaling, and when the SIP signaling arrives, the current step is ended; in the case of sending SIP signaling, after a command is sent to the participating user, the service focus stays at the current step and waits for a response and when the response is received, the current step is ended.
(3) A service process usually starts with the reception of SIP signaling, probably a SIP request for starting the service from a SIP user or a SIP request from a participating SIP user who is triggered to start a service.
(4) When the service requires resources from the network, the content gateway is controlled to deliver the content resources to the SIP user; the content gateway encodes, decodes, compresses, encrypts and consolidates the resources.
(5) At the end of the service, the SIP proxy server receives a service end request from the SIP user and unloads the service data.

In this embodiment, the SIP proxy server may be regarded as empty before a specific service process description information is loaded, but it has the ability to parse and execute the service process and SIP signaling. After the SIP proxy server loads different service descriptions according to the service requirement, the SIP proxy server acts as different service proxy servers. In this sense, the SIP proxy server may be regarded as a service driven proxy server.

Table 1 gives an exemplary syntactic structure describing how the SIP service control logic organizes SIP signaling. The BPEL4SIP structure may be sequential, parallel, conditional or cyclic.

**Table 1**

| Structure | Syntax |
|---|---|
| Sequential | <Sequence> |
| | <SIP-Command/> |
| | <SIP-Command/> |
| | </Sequence> |
| Parallel | <Flow > |
| | <SIP-Command/> |
| | <SIP-Command/> |
| | </Flow > |
| Conditional | <If> |
| | < Condition/> <SIP-Command/> |
| | <ElseIf> |
| | < Condition/> <SIP-Command/> |
| | </ Elself> |
| | <Else> |
| | <SIP-Command/> |
| | </ Else> |
| | </If> |
| Cyclic | <RepeatUntil> |
| | <SIP-Command/> |
| | <Condition/> |
| | </RepeatUntil > |
| | OR |
| | <While> |
| | < Condition/> |
| | < SIP-Command/> |
| | </While> |

A sequential structure includes multiple SIP signaling to be executed sequentially. The SIP signaling is executed in the sequence of their appearance under the Sequence element. After the last SIP signaling is executed, the entire sequential structure is complete.

A parallel structure includes multiple commands to be executed in parallel. The SIP signaling has no sequence in time. When all SIP signaling is executed, the entire parallel structure is complete.

A conditional structure includes SIP signaling to be executed. These conditions are defined in If, Zero, or multiple ElseIf and optional Else elements. If and ElseIf are sequential in time. The branch where the condition is first met is executed; when no conditions are met, the Else branch is executed. When the SIP signaling of the branch where the condition is first met or the Else branch is executed, the entire conditional structure is complete.

A cyclic structure includes SIP signaling to be executed repetitively. The structure is defined in RepeatUntil and While elements. The cyclic structure defined by RepeatUntil means the SIP signaling is repeated until the condition is met; when the condition is met, the cycling is ended and the entire cyclic structure is complete. The cyclic structure defined by While means the SIP signaling is executed so long as the condition is met; when the condition is not met, the cycling is ended and the entire cyclic structure is complete.

A nested structure means that the four types of structure may be nested within each structure and nested between structures during implementation. For example, a branch of a parallel structure may be sequential; a branch of a sequential structure may be parallel; a conditional structure may be nested in a conditional structure; and a cyclic structure may be nested in a cyclic structure.

As mentioned above, SIP signaling distinguishes between sending and receiving. In SIP signaling defined by SIP-Command, a certain attribute of the SIP-Command element is adapted to represent the two types of SIP signaling as below:
<SIP-Command Type=*** Direction=OUT/IN >

The Direction attribute has two options, OUT and IN, which indicate a sent SIP signaling and a received SIP signaling respectively; the Type attribute indicates the specific SIP signaling.

According to this embodiment, a new service may be developed by compiling a service process description information and loading and parsing the description information by an appropriate platform. When a new SIP service is under development, the SIP new service may be described by using BPEL4SIP in an offline manner. First, the SIP service process logic is abstracted; then SIP signaling is organized in one of or a combination of sequential, parallel, conditional, cyclic, and nested structures to describe the logic of the new SIP service. When the new service description file is added to the service process description information database, the development of the new SIP service is complete.

The second embodiment of the present invention is different from the first embodiment in that the second embodiment requires the service participant to execute the service jointly. The method in the second embodiment is applicable to more service scenarios.

A specific scenario will be described to clarify the application of the embodiment of the present invention.

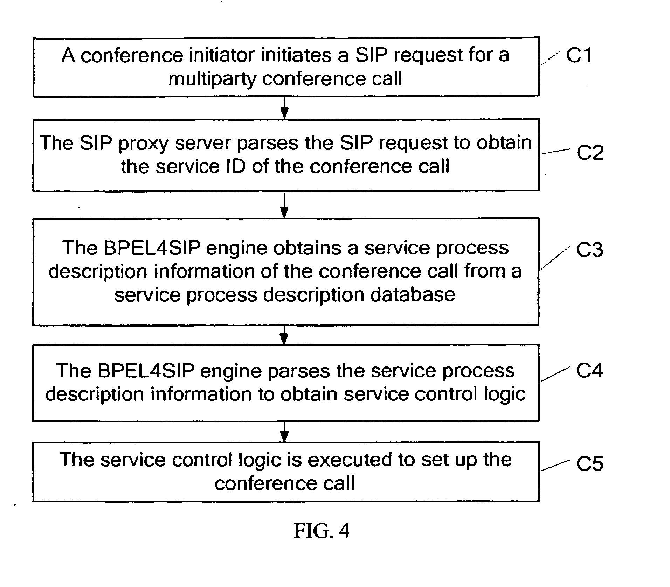

FIG. 4 shows a flowchart of a conference call method according to the third embodiment of the present invention. The method includes:
C1. A conference initiator initiates a SIP request for a multiparty conference call.
C2. A SIP proxy server parses the SIP request to obtain the service ID of the conference call.
C3. A BPEL4SIP engine obtains the service process description information of the conference call from a service process description information database according to the service ID of the conference call.
C4. The BPEL4SIP engine parses the service process description information to obtain service control logic.
C5. The service control logic is executed to set up the conference call.

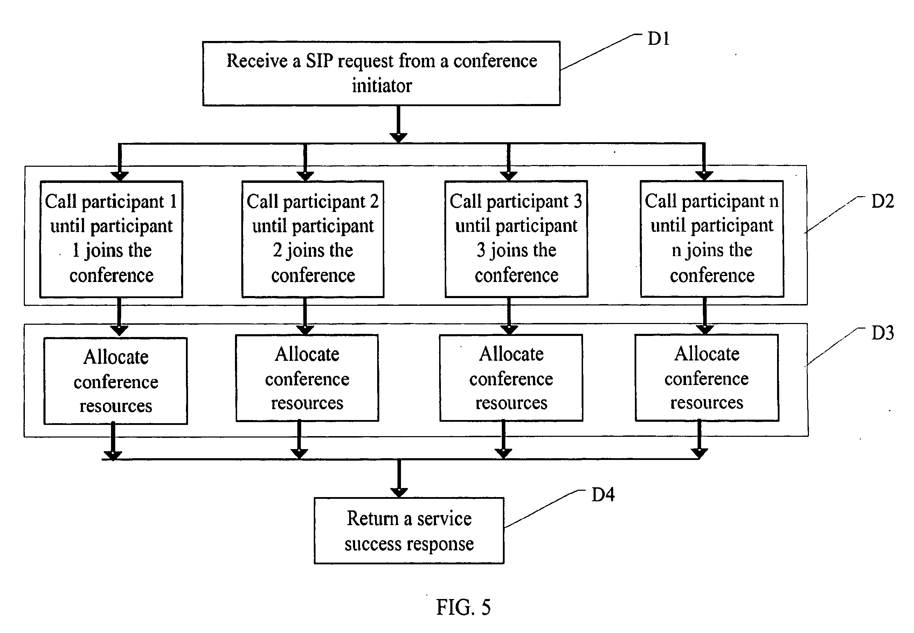

In the above conference call setup process, the service control logic is executed according to the process shown in FIG. 5. The process includes:
D1. The initiator sends an INVITE request, which carries a parameter indicating information of participants.

The SIP proxy server receives the INVITE request and executes the parallel structure of the service description. The parallel structure has no sequence.
D2. The SIP proxy server sends an INVITE request to a participant to invite the participant to join the conference and waits for a response from the participant; if the participant does not respond, the SIP proxy server sends another INVITE request in 120 seconds and repeats the operation until the participant responds.
D3. After the participant joins the conference successfully, the SIP proxy server controls the content gateway to allocate a conference resource.

The SIP proxy server executes steps D2 and D3 with respect to different participants so as to invite all participants.

D4. After execution on all parallel branches is complete, the SIP proxy server sends a success response to the conference initiator. Now, the process of initiating a conference call ends.

FIG. 5 shows a simple process of initiating a multiparty conference call but includes such basic process structures as sequential, parallel, cyclic and nested structures. It is evident that the n steps from "calling participant 1 until participant 1 joins the conference" to "calling participant n until participant n joins the conference" are parallel. Steps of "receiving a SIP request from the conference initiator", "calling participant i until participant i joins the conference", and "returning a service setup success response" are sequential. Herein, i = 1, 2, ..., n, where n is an integer. "Calling participant i until participant i joins the conference" is a cyclic structure. The nested structure means that the sequential structure embeds a parallel structure and the parallel structure embeds a cyclic structure. An example of the service process description information of the conference call is as follows:

```
     *******************************
     <Multi-Conference>
     <Sequence>
          <SIP-Command Type=Invite Direction=IN From=Sponsor />
          <Flow>
            <For-each select="Participators">
             <Value-of select="Participator_i"/>
               <RepeatUntil>
                    <Wait>Time=60</Wait>
                    < SIP-Command Type=Invite Direction=OUT To=Participator_i
 />
                    <Condition>Response=200</Condition>
            </ RepeatUntil >
            /*Control the content gateway to allocate conference resources for
 participants joining the conference*/
          </For-each>
          </Flow>
          < SIP-Command Type=Bye Direction=OUT To=Sponsor />
     </ Sequence >
     </ Multi-Conference >
     *******************************
```

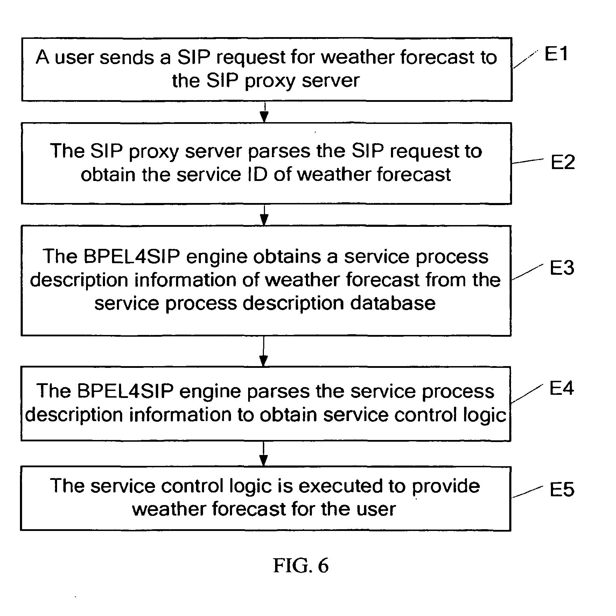

FIG. 6 shows a flowchart of a weather forecast method according to the fourth embodiment of the present invention. The method includes:
E1. A user sends a SIP request for weather forecast to the SIP proxy server.
E2. The SIP proxy server parses the SIP request to obtain the service ID of weather forecast.
E3. The BPEL4SIP engine obtains a service process description information of weather forecast from the service process description information database.
E4. The BPEL4SIP engine parses the service process description information to obtain service control logic.
E5. The service control logic is executed to provide weather forecast for the user.

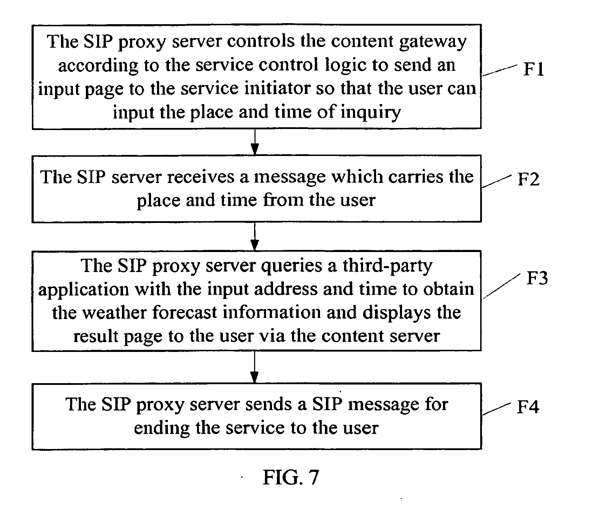

In this embodiment, the process of executing the service control logic to provide the weather forecast service for the user is shown in FIG. 7. The process includes:
F1. The SIP proxy server controls the content gateway according to the service control logic to send an input page to the service initiator so that the user can input the place and time of inquiry.
F2. The SIP proxy server receives a message which carries the place and time from the user.
F3. The SIP proxy server queries a third-party application with the input place and time to obtain the weather forecast information and displays the result page to the user via the content server.
F4. The SIP proxy server sends a SIP message for ending the service to the user.

An example of the process description of the weather forecast service is as follows:

```
     *******************************
     <Weather-Forecast>
     <Sequence>
            <SIP-Command Type=Invite Direction=IN From=Sponsor />
            /*Control the content gateway to send an input page*/
            <SIP-Command Type=Message Direction=IN From=Sponsor
            Time=20070830 Place=Shenzhen />
            /*Use a third-party application to query the weather forecast*/
     /*Control the content gateway to return a result page*/
          < SIP-Command Type=Bye Direction=OUT To=Sponsor />
       </Sequence>
     </ Weather-Forecast >
     *******************************
```

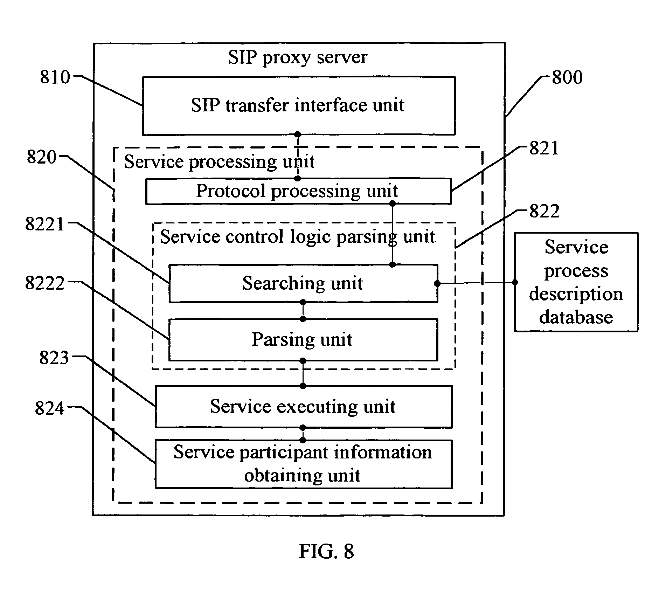

A SIP proxy server is provided according to the fifth embodiment of the present invention. As shown in FIG. 8, the SIP proxy server 800 includes:
a SIP transfer interface unit 810, adapted to receive a SIP request for using a service from a SIP user; and
a service processing unit 820, adapted to: obtain service control logic according to the SIP request received by the SIP transfer interface unit 810 and execute the service control logic to deliver the service to the SIP user.

In this embodiment, the service processing unit 820 includes a protocol processing unit 821, a service control logic parsing unit 822, and a service executing unit 823.

The protocol processing unit 821 is adapted to parse the SIP request received by the SIP transfer interface unit 810 to obtain the service ID of the service.

The service control logic parsing unit 822 is adapted to: load the service process description information corresponding to the service ID obtained by the protocol processing unit 821 and parse the service process description information to obtain the service control logic.

The service executing unit 823 is adapted to execute the service control logic obtained by the service control logic parsing unit 822 to deliver the service to the SIP user.

It is understandable that the service control logic parsing unit 822 may include:
a searching unit 8221, adapted to search the service process description information database for the service process description information corresponding to the service ID; and
a parsing unit 8222, adapted to parse the service process description information to obtain the service control logic.

It is understandable that, in the case of a service requiring other service participants, the service processing unit may further include:
a service participant information obtaining unit 824, adapted to parse the service process description information to obtain information of service participants or obtain participant information input by the user.

The service executing unit 823 is further adapted to execute the service control logic to control the SIP user and the service participants so as to complete the service delivery.

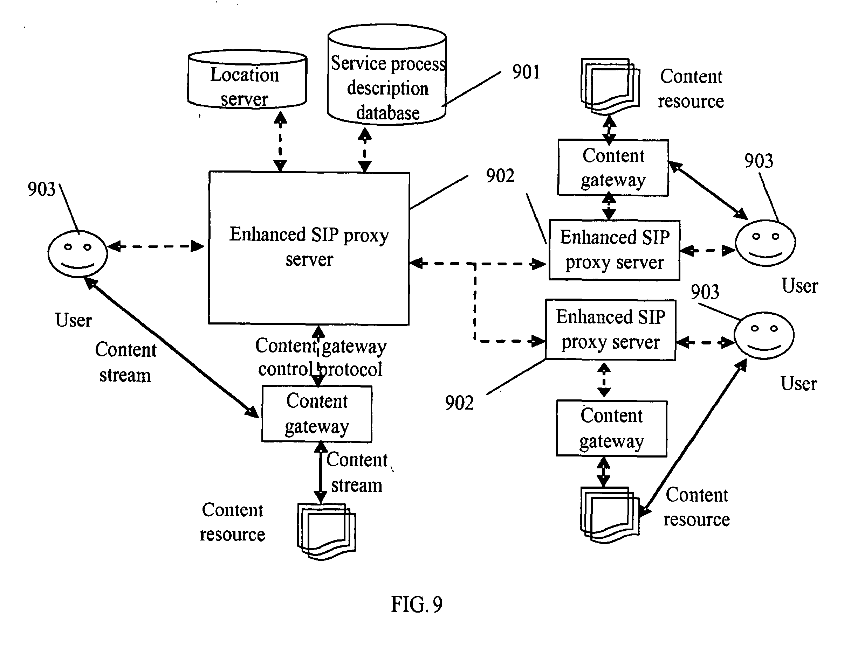

FIG. 9 shows a communication system according to an embodiment of the present invention.

The service process description information database 901 stores descriptions of various service processes which can be parsed and executed by the enhanced SIP proxy server 902. Herein, a SIP service may be a communication service or a web service that adopts the SIP protocol. The location server is adapted to locate the address of the SIP user 903.

The enhanced SIP proxy server 902 processes SIP messages so as to set up a service path and control the content gateway to deliver a content resource to the SIP user. The content resource may be a communication resource or a web resource depending on the SIP service.

When the service requires multiple participants, the enhanced SIP proxy server 902 can exchange SIP messages with not only other enhanced SIP proxy servers but also traditional SIP proxy servers so that they complete the service control together.

The enhanced SIP proxy server 902 shown in FIG. 9 controls the content gateway via a content gateway control protocol, which may be specifically H.248, SOAP, and so on. The format of a content stream may be RTP or HTTP or any other format.

The SIP service enhancement method and SIP proxy server of the present invention have been described through exemplary embodiments. According to the embodiments of the present invention, the SIP proxy server receives a SIP request for using a service from a SIP user, obtains the service control logic according to the SIP request, and executes the service control logic to deliver the service to the SIP user. In this way, the SIP proxy server is able to control a service and provide diversified services for users by executing different service control logic so as to meet user requirement for diversified services in the current communication system. It is apparent that those skilled in the art can make various modifications and variations to the invention without departing from the scope of the present invention. The embodiments of the present invention are not intended to limit the present invention.

## Claims

1. A Session Initiation Protocol (SIP) service enhancement method, comprising:
receiving (B1) a SIP request for using a service from a SIP user;
obtaining service control logic according to the SIP request wherein obtaining service control logic according to the SIP request comprises:
parsing (B2)the SIP request to obtain a service ID of the service;
loading (B3) a service process description information corresponding to the service ID; and
parsing (B4) the service process description information to obtain the service control logic; and
executing the service control logic to deliver the service to the SIP user.

2. The method according to claim 1, wherein before executing the service control logic to deliver the service to the SIP user, the method further comprises:
obtaining information of participants of the service requested by the SIP user.

3. The method according to claim 2, wherein executing the service control logic to deliver the service to the SIP user comprises:
controlling the SIP user and the service participants to interact by employing the service control logic to complete service delivery.

4. The method according to one of claims 1, 2 and 3, wherein obtaining service control logic according to the SIP request comprises:
parsing the SIP request to obtain a service ID of the service;
loading a service process description information corresponding to the service ID; and
parsing the service process description information to obtain the service control logic.

5. The method according to claim 1, wherein loading a service process description information corresponding to the service ID comprises:
interacting with a service process description database to obtain the service process description information corresponding to the service ID; wherein, the service process description database pre-reserve a corresponding relation between the service process description information and the service ID.

6. The method according to one of claims 2 and 3, wherein obtaining information of participants of the service requested by the SIP user comprises:
parsing the service process description information to obtain the information of participants of the service requested by the SIP user; or
obtaining information of participants of the service inputted by the user.

7. A Session Initiation Protocol (SIP) proxy server, comprising:
a SIP transfer interface unit (810), adapted to receive a SIP request for using a service from a SIP user; and
a service processing unit (820), adapted to obtain service control logic according to the SIP request received by the SIP transfer interface unit and execute the service control logic to deliver the service to the SIP user
wherein the service processing unit comprises:
a protocol processing unit (821), adapted to parse the SIP request received by the SIP transfer interface unit to obtain the service ID of the service;
a service control logic parsing unit (822), adapted to load the service process description information corresponding to the service ID obtained by the protocol processing unit and parse the service process description information to obtain the service control logic; and
a service executing unit (823), adapted to execute the service control logic obtained by the service control logic parsing unit to deliver the service to the SIP user.

8. The SIP proxy server according to claim 7, wherein, the service control logic parsing unit comprises:
a searching unit (8221), adapted to search the service process description database for the service process description information corresponding to the service ID; and
a parsing unit (8222), adapted to parse the service process description information to obtain the service control logic.

9. The SIP proxy server according to claim 7, wherein, the service processing unit further comprises:
a service participant information obtaining unit (824), adapted to parse the service process description information to obtain information of service participants or obtain participant information input by the user;
wherein the service executing unit is further adapted to execute the service control logic to control the SIP user and the service participants so as to complete the service delivery,

10. A communication system, comprising:
a Session Initiation Protocol (SIP) proxy server (800), adapted to receive a SIP request for using a service from a SIP user, obtain service control logic according to the SIP request and execute the service control logic to deliver the service to the SIP user wherein obtaining service control logic according to the SIP request comprises:
the SIP proxy server adapted to parse the SIP request to obtain a service ID of the service;
the SIP proxy server adapted to load a service process description information corresponding to the service ID;
the SIP proxy server adapted to parse the service process description information to obtain the service control logic; and
a service process description database, adapted to store description information of various service processes which can be parsed and executed by the SIP proxy server.

## Patentansprüche

1. Erweiterungsverfahren für einen "Session Initiation Protocol"-(SIP)-Dienst, das die folgenden Schritte aufweist:
Empfangen (B1) einer SIP-Anforderung zur Verwendung eines Dienstes von einem SIP-Benutzer;
Beschaffen einer Dienststeuerlogik gemäß der SIP-Anforderung, wobei das Beschaffen der Dienststeuerlogik gemäß der SIP-Anforderung umfasst:
Parsen (B2) der SIP-Anforderung, um eine Dienst-ID des Dienstes zu beschaffen; Laden (B3) von Dienstprozess-Beschreibungsinformationen die der Dienst-ID entsprechen; und
Parsen (B4) der Dienstprozess-Beschreibungsinformationen, um die Dienststeuerlogik zu beschaffen; und
Ausführen der Dienststeuerlogik, um dem SIP-Benutzer den Dienst zu erbringen.

2. Verfahren nach Anspruch 1, wobei vor dem Ausführen der Dienststeuerlogik, um dem SIP-Benutzer den Dienst zu erbringen, das Verfahren ferner aufweist:
Beschaffen von Informationen von Teilnehmern des Dienstes, der durch den SIP-Benutzer angefordert wird.

3. Verfahren nach Anspruch 2, wobei das Ausführen der Dienststeuerlogik, um dem SIP-Benutzer den Dienst zu erbringen, aufweist:
Steuern des SIP-Benutzers und der Dienstteilnehmer, so dass sie miteinander interagieren, durch Einsetzen der Dienststeuerlogik zum Durchführen der Diensterbringung.

4. Verfahren nach einem der Ansprüche 1, 2 und 3, wobei das Beschaffen der Dienststeuerlogik gemäß der SIP-Anforderung aufweist:
Parsen der SIP-Anforderung, um eine Dienst-ID des Dienstes zu beschaffen;
Laden von Dienstprozess-Beschreibungsinformationen, die der Dienst-ID entsprechen; und
Parsen der Dienstprozess-Beschreibungsinformationen, um die Dienststeuerlogik zu beschaffen.

5. Verfahren nach Anspruch 1, wobei das Laden von Dienstprozess-Beschreibungsinformationen, die der Dienst-ID entsprechen, aufweist:
Interagieren mit einer Dienstprozess-Beschreibungsdatenbank, um die Dienstprozess-Beschreibungsinformationen zu beschaffen, die der Dienst-ID entsprechen;
wobei die Dienstprozess-Beschreibungsdatenbank eine entsprechende Beziehung zwischen den Dienstprozess-Beschreibungsinformationen und der Dienst-ID im Voraus reserviert.

6. Verfahren nach einem der Ansprüche 2 und 3, wobei das Beschaffen von Informationen von Teilnehmern des Dienstes, der durch den SIP-Benutzer angefordert wird, aufweist:
Parsen der Dienstprozess-Beschreibungsinformationen, um die Informationen der Teilnehmer des Dienstes zu beschaffen, der durch den SIP-Benutzer angefordert wird; oder
Beschaffen von Informationen der Teilnehmer des Dienstes, die durch den Benutzer eingegeben werden.

7. "Session Initiation Protocol"-(SIP)-Proxyserver, der Folgendes aufweist:
eine SIP-Transferschnittstelleneinheit (810), die eingerichtet ist, eine SIP-Anforderung zur Verwendung eines Dienstes von einem SIP-Benutzer zu empfangen; und
eine Dienstverarbeitungseinheit (820), die eingerichtet ist, um eine Dienststeuerlogik gemäß der durch die SIP-Transferschnittstelleneinheit empfangenen SIP-Anforderung zu beschaffen und die Dienststeuerlogik auszuführen, um dem SIP-Benutzer den Dienst zu erbringen,
wobei die Dienstverarbeitungseinheit aufweist:
eine Protokollverarbeitungseinheit (821), die eingerichtet ist, die durch die SIP-Transferschnittstelleneinheit empfangene SIP-Anforderung zu parsen, um die Dienst-ID des Dienstes zu beschaffen;
eine Dienststeuerlogik-Parsingeinheit (822), die eingerichtet ist, die Dienstprozess-Beschreibungsinformationen zu laden, die der Dienst-ID entsprechen, die durch die Protokollverarbeitungseinheit beschafft wird, und die Dienstprozess-Beschreibungsinformationen zu parsen, um die Dienststeuerlogik zu beschaffen; und
eine Dienstausführungseinheit (823), die eingerichtet ist, die durch die Dienststeuerlogik-Parsingeinheit beschaffte Dienststeuerlogik auszuführen, um dem SIP-Benutzer den Dienst zu erbringen.

8. SIP-Proxyserver nach Anspruch 7, wobei die Dienststeuerlogik-Parsingeinheit aufweist:
eine Sucheinheit (8221), die eingerichtet ist, die Dienstprozess-Beschreibungsdatenbank nach den Dienstprozess-Beschreibungsinformationen zu durchsuchen, die der Dienst-ID entsprechen; und
eine Parsingeinheit (8222), die eingerichtet ist, die Dienstprozess-Beschreibungsinformationen zu parsen, um die Dienststeuerlogik zu beschaffen.

9. SIP-Proxyserver nach Anspruch 7, wobei die Dienstverarbeitungseinheit ferner aufweist:
eine Dienstteilnehmer-Informationsbeschaffungseinheit (824), die eingerichtet ist, die Dienstprozess-Beschreibungsinformationen zu parsen, um Informationen von Dienstteilnehmern zu beschaffen oder Teilnehmerinformationen zu beschaffen, die durch den Benutzer eingegeben werden;
wobei die Dienstausfi.ihrungseinheit ferner eingerichtet ist, die Dienststeuerlogik auszuführen, um den SIP-Benutzer und die Dienstteilnehmer so zu steuern, dass die Diensterbringung durchgerührt wird.

10. Kommunikationssystem, das Folgendes aufweist:
einen "Session Initiation Protocol"-(SIP)-Proxyserver (800), der eingerichtet ist, eine SIP-Anforderung zur Verwendung eines Dienstes von einem SIP-Benutzer zu empfangen, eine Dienststeuerlogik gemäß der SIP-Anforderung zu beschaffen und die Dienststeuerlogik auszuführen, um dem SIP-Benutzer den Dienst zu erbringen, wobei das Beschaffen der Dienststeuerlogik gemäß der SIP-Anforderung aufweist:
den SIP-Proxyserver, der eingerichtet ist, die SIP-Anforderung zu parsen, um eine Dienst-ID des Dienstes zu beschaffen;
den SIP-Proxyserver, der eingerichtet ist, Dienstprozess-Beschreibungsinformationen zu laden, die der Dienst-ID entsprechen;
den SIP-Proxyserver, der eingerichtet ist, die Dienstprozess-Beschreibungsinformationen zu parsen, um die Dienststeuerlogik zu beschaffen; und
eine Dienstprozess-Beschreibungsdatenbank, die eingerichtet ist, Beschreibungsinformationen von verschiedenen Dienstprozessen zu speichern, die durch den SIP-Proxyserver geparst und ausgeführt werden können.

## Revendications

1. Procédé d'amélioration d'un Service de Protocole d'Ouverture de Session (SIP, Session Initiation Protocol), comprenant :
la réception (B1) d'une demande SIP d'utilisation d'un service en provenance d'un utilisateur SIP ;
l'obtention d'une logique de contrôle de service conformément à la demande SIP, dans lequel l'obtention de la logique de contrôle de service conformément à la demande SIP comprend :
l'analyse syntaxique (B2) de la demande SIP afin d'obtenir un ID de service pour le service ;
le chargement (B3) d'une information de description de processus de service correspondant à l'ID de service ; et
l'analyse syntaxique (B4) de l'information de description de processus de service afin d'obtenir la logique de contrôle de service ; et
l'exécution de la logique de contrôle de service pour délivrer le service à l'utilisateur SIP.

2. Procédé selon la revendication 1, dans lequel, avant l'exécution de la logique de contrôle de service pour délivrer le service à l'utilisateur SIP, le procédé comprend en outre :
l'obtention d'informations des participants au service demandé par l'utilisateur SIP.

3. Procédé selon la revendication 2, dans lequel l'exécution de la logique de contrôle de service pour délivrer le service à l'utilisateur SIP comprend :
le contrôle de l'utilisateur SIP et des participants au service afin qu'ils interagissent en utilisant la logique de contrôle de service pour effectuer la livraison du service.

4. Procédé selon l'une des revendications 1, 2 et 3, dans lequel l'obtention de la logique de contrôle de service conformément à la demande SIP comprend :
l'analyse syntaxique de la demande SIP afin d'obtenir un ID de service du service ;
le chargement d'une information de description de processus de service correspondant à l'ID de service ; et
l'analyse syntaxique de l'information de description de processus de service afin d'obtenir la logique de contrôle de service.

5. Procédé selon la revendication 1, dans lequel le chargement d'une information de description de processus de service correspondant à l'ID de service comprend :
l'interaction avec la base de données de description de processus de service afin d'obtenir l'information de description de processus de service correspondant à l'ID de service ; dans lequel la base de données de description de processus de service pré-réserve à l'avance une relation de correspondance entre l'information de description de processus de service et l'ID de service.

6. Procédé selon l'une des revendications 2 et 3, dans lequel l'obtention d'informations de participants au service demandé par l'utilisateur SIP comprend :
l'analyse syntaxique de l'information de description de processus de service afin d'obtenir les informations de participants au service demandé par l'utilisateur SIP ; ou
l'obtention d'informations de participants au service fournies en entrée par l'utilisateur.

7. Serveur mandataire de Protocole d'Ouverture de Session (SIP), comprenant :
une unité d'interface de transfert SIP (810) apte à recevoir une demande SIP d'utilisation d'un service en provenance d'un utilisateur SIP ; et
une unité de traitement de service (820) apte à obtenir une logique de contrôle de service conformément à la demande SIP reçue par l'unité d'interface de transfert SIP et à exécuter la logique de contrôle de service pour délivrer le service à l'utilisateur SIP ;
dans lequel l'unité de traitement de service comprend :
une unité de traitement de protocole (821) apte à analyser syntaxiquement la demande SIP reçue par l'unité d'interface de transfert SIP afin d'obtenir l'ID de service pour le service ;
une unité d'analyse syntaxique de logique de contrôle de service (822) apte à charger l'information de description de processus de service correspondant à l'ID de service obtenu par l'unité de traitement de protocole et à analyser syntaxiquement l'information de description de processus de service afin d'obtenir la logique de contrôle de service ; et
une unité d'exécution de service (823), apte à exécuter la logique de contrôle de service obtenue par l'unité d'analyse syntaxique de logique de contrôle de service pour délivrer le service à l'utilisateur SIP.

8. Serveur mandataire SIP selon la revendication 7, dans lequel l'unité d'analyse syntaxique de logique de contrôle de service comprend :
une unité de recherche (8221), apte à rechercher dans la base de données de description de processus de service l'information de description de processus de service correspondant à l'ID de service ; et
une unité d'analyse syntaxique (8222), apte à analyser syntaxiquement l'information de description de processus de service afin d'obtenir la logique de contrôle de service.

9. Serveur mandataire SIP selon la revendication 7, dans lequel l'unité de traitement de service comprend en outre :
une unité d'obtention d'informations de participants au service (824), apte à analyser syntaxiquement l'information de description de processus de service afin d'obtenir des informations de participants au service ou d'obtenir des informations de participants fournies en entrée par l'utilisateur ;
dans lequel l'unité d'exécution de service est en outre apte à exécuter la logique de contrôle de service pour contrôler l'utilisateur SIP et les participants au service de manière à réaliser la livraison du service.

10. Système de communication, comprenant :
un serveur mandataire (800) de Protocole d'Ouverture de Session (SIP) apte à recevoir une demande SIP d'utilisation d'un service en provenance d'un utilisateur SIP, à obtenir une logique de contrôle de service conformément à la demande SIP et à exécuter la logique de contrôle de service pour délivrer le service à l'utilisateur SIP, dans lequel l'obtention de la logique de contrôle de service conformément à la demande SIP comprend :
le serveur mandataire SIP apte à analyser syntaxiquement la demande SIP afin d'obtenir un ID de service pour le service ;
le serveur mandataire SIP apte à charger une information de description de processus de service correspondant à l'ID de service ;
le serveur mandataire SIP apte à analyser syntaxiquement les informations de description de processus de service afin d'obtenir la logique de contrôle de service ; et
une base de données de description de processus de service, apte à stocker des informations de description de divers processus de services qui peuvent être analysés syntaxiquement, et exécutés par le serveur mandataire SIP.
